# EUROPEAN PATENT SPECIFICATION

(11) **EP 1 867 188 B1**
(45) Date of publication and mention of the grant of the patent: **13.05.2009**
(21) Application number: 05736795.5
(22) Date of filing: 06.04.2005
(51) Int. Cl.: H04W 8/18

(54) **SUBSCRIBER IDENTITY MODULE AND MOBILE COMMUNICATIONS DEVICE USING SUCH MODULE**
TEILNEHMERIDENTITÄTSMODUL UND MOBILKOMMUNIKATIONSEINRICHTUNG MIT EINEM SOLCHEN MODUL
MODULE D'IDENTITE D'ABONNE ET DISPOSITIF DE COMMUNICATION MOBILE UTILISANT UN TEL MODULE

(43) Date of publication of application: 19.12.2007
(73) Proprietor: Telit Communications S.p.A., 34010 Sgonico (IT)
(72) Inventor: MOSCOVITZ, Yossi Dai Telecom Ltd, 67060 Tel-Aviv (IL); DEPERINI, Fabio Dai Telecom S.p.A., I-34010 SGONICO (IT); LOCATELLI, Miran Dai Telecom S.p.A., I-34010 SGONICO (IT)
(74) Representative: Alagem Modiano, Lara S.
(86) International application number: PCT/EP2005/003612
(87) International publication number: WO 2006/048051

(56) References cited:
- EP-A- 1 496 716
- "Digital cellular telecommunications system (Phase 2+); Numbering, Addressing and Identification (3GPP TS 03.03 version 7.7.0 Release 1998); ETSI TS 100 927" ETSI STANDARDS, EUROPEAN TELECOMMUNICATIONS STANDARDS INSTITUTE, SOPHIA-ANTIPO, FR, vol. 3-CN4;SMG3, no. V770, June 2002 (2002-06), XP014005712 ISSN: 0000-0001

## Description

### Technical Field

The present invention relates to a Subscriber Identity Module (SIM) and mobile communications device using such SIM for implementing additional features in a mobile communication system, specifically in a mobile communication system in which the SIM is not bound to a particular mobile service provider and in which the communications device used by the subscriber can be identified.

### Background Art

In the past years mobile communications devices such as mobile phones have become very popular. The growth of population of subscribers using mobile communications devices has led the network coverage to expand until the most remote or impervious locations of almost all countries.

Moreover, the network operators and the service providers continue to implement an ever increasing number of services which can be personalized and upgraded by the subscriber.

The most commonly used mobile communication technology in Europe is the GSM (Global System for Mobile communications).

Other GSM-based technologies are known, such as DCS (Digital Cellular System), PCS (Personal Communications System), GPRS (General Packet Radio Service) or extensions such as GSM-R or EDGE (Enhanced Data Rates for Global Evolution).

As it is known, the GSM networks notoriously comprise a number of sub-networks which are managed by a respective operator and cover-the same or different geographical areas.

Since several countries are covered by the wireless communication networks, international standards have been introduced for regulating communications and subscriber identification and also for allowing the manufacturers to produce mobile equipment that can be used in any one of such countries without incurring access problems.

In the commonly used mobile phones, modules of the removable kind called SIMs (Subscriber Identity Module) are used. SIMs are sold by a certain service provider and contain authentication codes stored therein.

When the mobile phone carrying a removable SIM attempts to register with a mobile network, such codes are communicated to the network, which checks a Home Location Register (HLR) of the subscriber in order to allow access of the mobile phone to the network.

Since the mobile communication technology is rapidly growing, some communication standards may cause problems if new functions are needed to be performed by devices through a mobile network.

A manufacturer of mobile communications devices must produce devices that are compatible with subscriber identification standards and must foresee all possible network operators and countries in which the device can be used.

Moreover, when a mobile communications device having specific functions that are not limited to voice communications only is attempting to access a mobile network, network operators or service providers are not able to quickly determine the kind of mobile communications device as well as its functionalities.

### Disclosure of the Invention

The aim of the present invention is to allow mobile communications devices to be identified by a wireless network according to their functionalities or their specific hardware.

Within the above aim, a particular object of the invention is to develop mobile communications devices that are manufacturable, including the SIM, without being necessarily bound to specific network operators or service providers.

The above aim and objects and other objects which will become apparent hereinafter are achieved by a Subscriber Identity Module (SIM) for installation in a mobile communications device for identifying the device in a wireless telecommunications network, the SIM comprising an International Mobile Subscriber Identity (IMSI) code stored therein which comprises a Mobile Country Code (MCC), a Mobile Network Code (MNC) and a Mobile Station Identification Number (MSIN), wherein at least one of the MCC and MNC has a value identifying the kind of mobile communications device on which the SIM is to be installed.

The aim and the objects of the invention are also achieved by a mobile communications device for accessing a wireless telecommunications network, the device comprising an SIM for identifying the device in the wireless telecommunications network, the SIM comprising an International Mobile Subscriber Identity (IMSI) code stored therein which contains a Mobile Country Code (MCC), a Mobile Network Code (MNC) and a Mobile Station Identification Number (MSIN), wherein the MCC has a value that is characteristic of the kind of the mobile communications device.

In the preferred embodiments of the invention, the SIM is integrated into the mobile communications device so that it can be built directly by the manufacturer and cannot be removed from the device.

Moreover, while the MCC value is preferably associated to a kind of a mobile device, the MNC value is associated to at least one functionality or a family of functionalities of such device. Accordingly, the device can be associated to a virtual country by means of the MCC and to a virtual network by means of the MNC, the resulting IMSI being a global network identifier that is independent from the network operators.

The MCC value is selected from the group of values that is currently unassigned according to the standard E.212 of the ITU. Particularly, the MCC value is preferably selected from the decimal range comprised between 800 and 899 or between 902 and 999.

The network technologies in which the present invention can be applied are preferably GSM, GPRS, EDGE and UMTS.

### Brief Description of the Drawings

Further characteristics and advantages of the invention will become better apparent from the detailed description of particular but not exclusive embodiments, illustrated by way of non-limiting examples in the accompanying drawings, wherein:
Figure 1 is a schematic view of a known arrangement of a mobile communication device;
Figure 2 is a first preferred arrangement for a mobile communications device according to the invention;
Figure 3 is second preferred arrangement for a mobile communications device according to the invention;
Figure 4 represents a string of decimal digits characterizing an IMSI according to the invention.

### Ways of carrying out the Invention

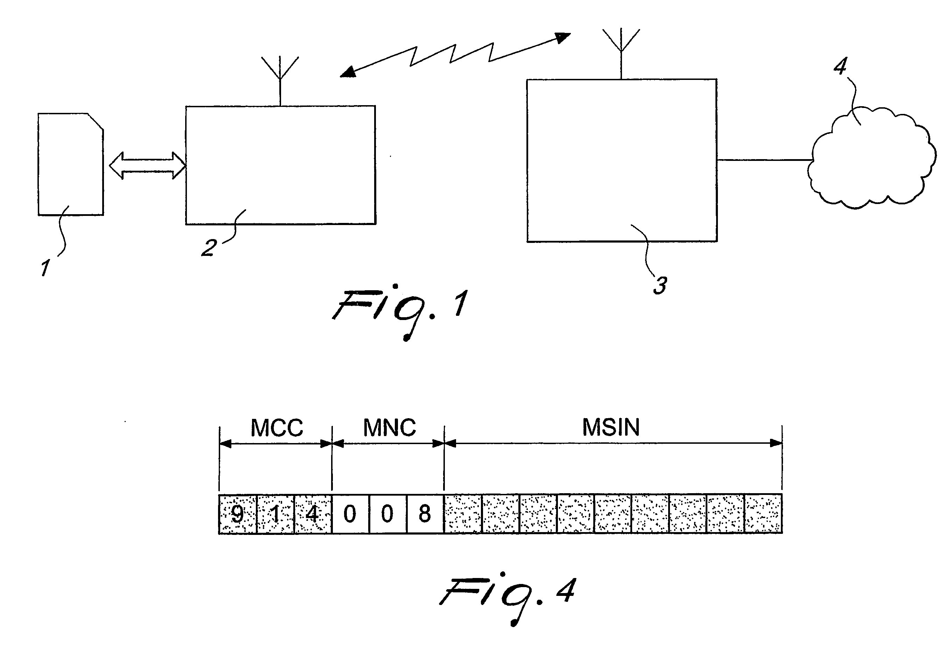

With reference to figure 1, a known arrangement for enabling mobile communications consists of a mobile station 2 in which a Subscriber Identity Module or SIM 1 is removably installed.

An SIM is a removable card that is separate from any memory means and it is used for establishing communication between a mobile station and a mobile network. The specification of SIMs is given by *"Digital cellular telecommunications system (Phase 2): Specification of the Subscriber Identity Module - Mobile Equipment (SIM-ME) interface",* ETSI (European Telecommunications Standards Institute) specification no. GSM 11.11, which is incorporated herein by reference.

The mobile station 2 is provided with an antenna which allows wireless communication with a local Base Station 3 connected to a mobile network 4.

Although not explicitly shown in the figures, the mobile network 4 comprises Mobile Switching Centres (MSCs), which switch speech and data connections between the Base Stations, other MSCs, other networks and external non-mobile networks. The MSCs also handle a number of functions associated with mobile subscribers, such as registration, location updating and handover between a mobile station and the mobile network.

An SIM comprises stored therein an International Mobile Subscriber Identity (IMSI), which is a sequence of bits divided into three groups: a Mobile Country Code or MCC (three decimal digits), a Mobile Network Code or MNC (two or three decimal digits) and a Mobile Station Identification Number or MSIN (ten or nine decimal digits, depending on the length of the MNC). The IMSI is conventionally used for authentication of the subscriber before a mobile network, in order to prevent access of unregistered users.

The SIM also stores a private encryption key Ki corresponding to the subscriber and a session key Kc which is stored after authentication.

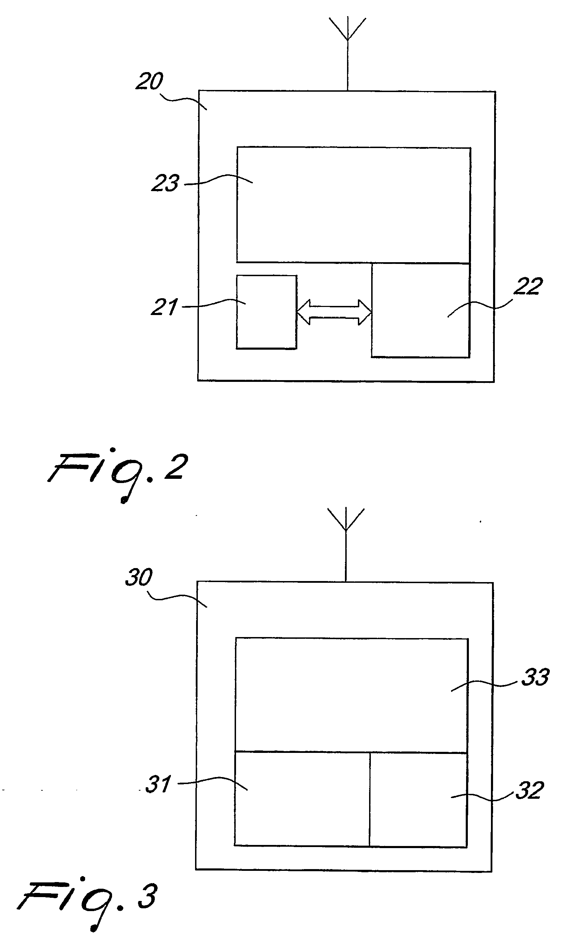

In a first preferred embodiment of the invention, shown in Figure 2, an SIM 21 is integrated into the mobile communications device 20. In particular, the SIM is formed on a integrated circuit so as to have a pin arrangement (not shown) complying with the ETSI specification GSM 11.11, namely a supply pin C1, a reset pin C2, a clock pin C3, a ground pin C5, a programming supply pin C6, an I/O pin C7.

The integrated SIM circuit 21 is soldered on the electronic board of the mobile communications device, which contains an SIM interface 22 and conventional communication electronic circuitry 23, so as to substitute the conventional plug-in arrangement that is used in mobile communications devices.

The SIM interface 22 is used to put the SIM 21 in communication with circuitry 23 and to exchange data with the mobile network according to the protocol defined by the above specification ETSI GSM 11.11.

In a second preferred embodiment of the invention, which is schematically shown in Figure 3, a mobile communications device 30 is provided in which an integrated circuit 31 having SIM functionalities compatible with ETSI GSM 11.11 is directly formed on the main electronic board of the mobile device 30.

The SIM circuit 31 comprises its own microcontroller and interface for communicating with a conventional communication electronic circuitry 33 and an SIM memory 32, which stores the files conventionally carried by SIM cards of the removable kind.

The microcontroller of the SIM circuit 32 is set to handle ciphering algorithms and encrypted exchange of data with mobile networks, such as RAND, SRES and Kc.

The above embodiments of the invention are **characterized in that** the IMSI that is stored into integrated SIM 21 or in the SIM memory means 32 is chosen so as to be independent of the network operator or home country of the user.

In particular, the MCC value of the IMSI is associated to the particular kind of device on which the SIMs 21 or 31 are installed. To this aim, an MCC value that is currently unassigned by the standard E.212 of the ITU (International Telecommunications Union) is assigned to each family of mobile communications devices. Such value is comprised between 800 and 899 or between 902 and 999. The value 901 cannot be used since it has been assigned by the ITU to devices of the so-called Global Mobile Satellite System.

A virtual country corresponding to a community of mobile communications devices is accordingly assigned to each MCC value. For instance, a community of devices may comprise wireless alarm devices to be installed on cars, or cameras of a video surveillance system, and so on.

Within a community of devices, a particular functionality or a group of functionalities is associated to a value of the MNC, so that each community can have as far as 100 (for 2-digit MNCs) or 1000 (for 3-digit MNCs) functionalities.

For instance, with reference to Figure 4, an MCC value of 914 may identify the family of cameras for video surveillance systems and an MNC value of 008 may identify the functionality of making emergency calls to a public security authority or sending emergency signals which carry both video and location information.

Although the preferred embodiments comprise an SIM according to the invention which cannot be removed from the mobile communications device on which it is installed, the SIM according to the invention may be also an SIM of the removable kind, which carries an IMSI having the MCC identifying the kind of mobile communications device on which the SIM is to be installed.

When the mobile communications device attempts to register with a mobile network (e.g. by roaming), the local base station uses the MCC for identifying the kind of mobile communications device and the MNC for identifying the functionality of the device of the kind identified by the MCC.

The MSIN is instead used for identifying the single mobile communications device within a family and is stored in the home location register together with the IMSI and other conventional authentication parameters such as Ki and Kc, so as to allow the user to roam from one mobile network into another one.

Optionally, the integrated SIM 21 or the SIM memory means 32 may comprise a list of MCC/MNC pairs of different preferred PLMNs, in order to provide a fall-back position should the access to the mobile network be refused.

It has been shown that the SIM and the mobile communications device according to the -invention fully achieve the intended aim and objects, since they allow the manufacturers of mobile communications devices not to be bound to one or more network operators when manufacturing a mobile communications device. The manufacturers can assign only a Global Network Identifier comprising the MCC and the MNC disclosed above to each mobile device based on the kind of the device and its functionalities.

The preferred embodiments in which the SIM is integrally formed into the mobile communications device are particularly advantageous because the manufacturer can produce mobile devices having SIMs already installed thereon.

Accordingly, such mobile devices are ready to use, since they are already provided with an SIM functionality which is intrinsically associated with the device itself, because of the association of the pre-stored MCC and MNC with the particular nature of mobile device.

Moreover, since the SIMs according to the preferred embodiments of the invention cannot be removed from the mobile communications device on which they are installed, a high degree of safety can be guaranteed when such device is stolen. In fact, the SIM could not be replaced by a fraudulent one and the IMSI of the device may be even communicated by the proprietor to a network operator in order to block communications from and to such device.

Clearly, several modifications will be apparent to and can be readily made by the skilled in the art without departing from the scope of the present invention. Therefore, the scope of the claims shall not be limited by the illustrations or the preferred embodiments given in the description in the form of examples, but rather the claims shall encompass all of the features of patentable novelty that reside in the present invention, including all the features that would be treated as equivalents by the skilled in the art.

## Claims

1. Subscriber Identity Module SIM for installation in a mobile communications device for identifying said device in a wireless telecommunications network, said SIM comprising an International Mobile Subscriber Identity IMSI code stored therein, said IMSI code comprising a Mobile Country Code MCC, a Mobile Network Code MNC and a Mobile Station Identification Number MSIN, wherein at least one of said MCC and MNC has a value that is characteristic of the kind of mobile communications device on which the SIM is to be installed.

2. The Subscriber Identity Module of claim 1, wherein when said MCC has a value that is characteristic of the kind of said mobile communications device said value is selected from the group of values that is unassigned by the standard E.212 of the ITU.

3. The Subscriber Identity Module of claim 1 or 2, wherein said MNC has a value that is representative of at least one functionality of said mobile communications device.

4. A mobile communications device for accessing a wireless telecommunications network comprising a Subscriber Identity Module SIM for identifying said device in a wireless telecommunications network, the SIM comprising an International Mobile Subscriber Identity IMSI code stored therein, said IMSI code comprising a Mobile Country Code MCC, a Mobile Network Code MNC and a Mobile Station Identification Number MSIN, wherein said MCC has a value that is characteristic of the kind of said mobile communications device.

5. The mobile communications device of claim 4, wherein said MNC has a value that is representative of at least one functionality of said mobile communications device.

6. The mobile communications device of claim 4 or 5, wherein the SIM is integrally formed into the mobile communications device so that the SIM cannot be removed from the device.

7. The mobile communications device of claim 4 or 5, wherein the SIM is an integrated circuit which is soldered to a circuit board carrying the electronic communications components of said mobile communications device.

8. The invention according to any one of the preceding claims, wherein said wireless telecommunications network is selected from the group comprising GSM networks, GPRS networks, EDGE networks and UMTS network.

## Patentansprüche

1. Teilnehmer-Identitätsmodul SIM zur Installation in einem mobilen Kommunikationsgerät zur Identifizierung des Geräts in einem drahtlosen Telekommunikationsnetzwerk, wobei das SIM einen in ihm abgespeicherten IMSI-Code (internationaler Funkteilnehmeridentitätscode) enthält, der IMSI-Code einen Funk-Ländercode MCC, einen Funk-Netzwerkcode MNC und eine Funkstation-Identifizierungsnummer MSIN umfasst und wenigstens einer von MCC und MNC einen Wert enthält, der für die Art des mobilen Kommunikationsgeräts charakteristisch ist, auf dem das SIM installiert werden soll.

2. Teilnehmer-Identitätsmodul nach Anspruch 1, bei dem für den Fall, dass der MCC einen Wert aufweist, der charakteristisch für die Art des mobilen Kommunikationsgeräts ist, dieser Wert aus einer Gruppe von Werten ausgewählt ist, die nicht durch den Standard E.212 der ITU zugeordnet sind.

3. Teilnehmer-Identitätsmodul nach Anspruch 1 oder 2, bei dem der MNC einen Wert aufweist, der wenigstens eine Funktionalität des mobilen Kommunikationsgeräts repräsentiert.

4. Mobiles Kommunikationsgerät zum Zugang zu einem drahtlosen Telekommunikationsnetzwerk, das ein Teilnehmer-Identitätsmodul SIM zur Identifizierung des Geräts in einem drahtlosen Telekommunikationsnetzwerk aufweist, wobei das SIM einen in ihm abgespeicherten IMSI-Code (internationaler Funkteilnehmeridentitätscode) enthält, der IMSI-Code einen Funk-Ländercode MCC, einen Funk-Netzwerkcode MNC und eine Funkstation-Identifizierungsnummer MSIN umfasst und der MCC einen Wert aufweist, der für die Art des mobilen Kommunikationsgeräts charakteristisch ist.

5. Mobiles Kommunikationsgerät nach Anspruch 4, bei dem der MNC einen Wert aufweist, der wenigstens eine Funktionalität des mobilen Kommunikationsgeräts repräsentiert.

6. Mobiles Kommunikationsgerät nach Anspruch 4 oder 5, bei dem das SIM integral in dem mobilen Kommunikationsgerät eingebaut ist, sodass das SIM nicht von dem Gerät entfernt werden kann.

7. Mobiles Kommunikationsgerät nach Anspruch 4 oder 5, bei dem das SIM ein integrierter Schaltkreis ist, der auf eine Schaltungsplatte gelötet ist, die die elektronischen Kommunikationsbauelemente des mobilen Kommunikationsgeräts trägt.

8. Die Erfindung nach einen der vorstehenden Ansprüche, bei der das drahtlose Telekommunikationsnetzwerk aus einer Gruppe ausgewählt ist, die GSM-Netzwerke, GPRS-Netzwerke, EDGE-Netzwezke und UMTS-Netzwerke umfasst.

## Revendications

1. Module d'identification d'abonné SIM pour installation dans un dispositif de communication mobile pour identifier ledit dispositif dans un réseau de télécommunications sans fil, ledit module SIM comportant un code d'identité internationale d'abonné mobile IMSI mémorisé dans celui-ci, ledit code IMSI comportant un code de pays mobile MCC, un code de réseau mobile MNC et un numéro d'identification de station mobile MSIN, dans lequel au moins l'un desdits codes MCC et MNC a une valeur qui est caractéristique du type de dispositif de communication mobile sur lequel le module SIM est installé.

2. Module d'identification de l'abonné selon la revendication 1, dans lequel, lorsque ledit code MCC a une valeur qui est caractéristique du type dudit dispositif de communication mobile, ladite valeur est sélectionnée à partir du groupe de valeurs qui est non attribué par la norme E.212 de l'ITU.

3. Module d'identification de l'abonné selon la revendication 1 ou 2, dans lequel ledit code MCC a une valeur qui est représentative d'au moins une fonctionnalité dudit dispositif de communication mobile.

4. Dispositif de communication mobile pour accéder à un réseau de télécommunications sans fil comportant un module d'identification d'abonné SIM pour identifier ledit dispositif dans un réseau de télécommunications sans fil, le module SIM comportant un code d'identité internationale d'abonné mobile IMSI mémorisé dans celui-ci, ledit code IMSI comportant un code de pays mobile MCC, un code de réseau mobile MNC et un numéro d'identification de station mobile MSIN, dans lequel ledit code MCC a une valeur qui est caractéristique du type dudit dispositif de communication mobile.

5. Dispositif de communication mobile selon la revendication 4, dans lequel ledit code MNC a une valeur qui est représentative d'au moins une fonctionnalité dudit dispositif de communication mobile.

6. Dispositif de communication mobile selon la revendication 4 ou 5, dans lequel le module SIM est formé de manière intégrée dans le dispositif de communication mobile de sorte qu'un module SIM ne peut pas être retiré du dispositif.

7. Dispositif de communication mobile selon la revendication 4 ou 5, dans lequel le module SIM est un circuit intégré qui est soudé à une carte de circuit imprimé supportant les composants de communications électroniques dudit dispositif de communication mobile.

8. Invention selon l'une quelconque des revendications précédentes, dans laquelle ledit réseau de télécommunications sans fil est sélectionné à partir du groupe comportent des réseaux GSM, des réseaux GPRS, des réseaux EDGE et un réseau UMTS.
